# EUROPÄISCHE PATENTSCHRIFT

(11) **EP 3 216 594 B1**
(45) Veröffentlichungstag und Bekanntmachung des Hinweises auf die Patenterteilung: **16.06.2021**
(21) Anmeldenummer: 17160215.4
(22) Anmeldetag: 09.03.2017
(51) Int. Cl.: B31F 1/00, B31B 50/59, B29C 51/26

(54) **VORRICHTUNG ZUM KLEMMEN, HALTEN UND FÜHREN VON FLÄCHIGEM MATERIAL UND VERFAHREN ZUM BETRIEB DER VORRICHTUNG**
APPARATUS FOR CLAMPING, HOLDING AND GUIDING FLAT MATERIAL AND PROCESS FOR OPERATING THE APPARATUS
DISPOSITIF POUR PINCER, SERRER ET GUIDER UN MATÉRIAU PLAT ET PROCÉDÉ DE FONCTIONNEMENT DU DISPOSITIF

(30) Priorität: 10.03.2016 DE 102016104375
(43) Veröffentlichungstag der Anmeldung: 13.09.2017
(73) Patentinhaber: Pester Pac Automation GmbH, 87787 Wolfertschwenden (DE)
(72) Erfinder: Haug, Hans, 87730 Bad Grönenbach (DE)
(74) Vertreter: Patentanwaltzkanzlei Hutzelmann

(56) Entgegenhaltungen:
- DE-A1-102008 050 564
- GB-A- 881 703
- US-A- 2 713 443
- US-A- 3 476 377
- US-A- 4 143 587
- US-A- 5 879 724

## Beschreibung

Die Erfindung bezieht sich auf eine Vorrichtung zum Klemmen, Halten und/oder Führen von flächigem Material beim dreidimensionalen Umformen.

Gerade beim Umformen von flächigem Material aus Naturfasern, wie zum Beispiel Papier, Pappe oder Karton werden Tiefdrückverfahren eingesetzt, bei denen sich unkontrolliert Falten im Bereich von Materialstauchungen ergeben, die im Nachhinein nicht mehr korrigierbar sind.

Das Erscheinungsbild, die Formstabilität, Festigkeit und Dichtigkeit des fertigen dreidimensionalen Gegenstandes werden dabei negativ beeinflusst.

Zudem ist die Höhe der Umformung begrenzt.

In der Vergangenheit wurden daher Anstrengungen unternommen, die entstehenden Falten an vorbestimmten Stellen entstehen zu lassen. Dies wurde beispielsweise durch Prägungen im flächigen Material versucht.

Aber auch das ist nur eine Notlösung. Vielmehr ist es gewünscht, keine bzw. zumindest keine sichtbaren Falten entstehen zu lassen.

Daher ist bei der erfindungsgemäßen Vorrichtung, wie auch im bekannten Stand der Technik, eine Anpressvorrichtung und eine Unterlage vorgesehen, wobei ein mechanischer Antrieb vorgesehen ist, der die Anpressvorrichtung gegen die Unterlage zu pressen vermag und wobei zwischen Anpressvorrichtung und mechanischem Antrieb und/oder im mechanischen Antrieb wenigstens ein Federelement vorgesehen ist.

Aus der DE 10 2013 107 932 ist beispielsweise ein Tiefziehverfahren für flächiges Material bekannt, bei dem entstehende Falten derart fein verteilt werden, daß diese zumindest nicht sichtbar sind.

Aus der US 5,879,724A und der US 4,143,587A sind Umformvorrichtungen bekannt, welche Federelemente zur Begrenzung der Anpresskraft eines Niederhalters für das umzuformende Material enthalten.

Der vorliegenden Erfindung liegt die Aufgabe zugrunde, eine Vorrichtung und ein Verfahren vorzuschlagen, den Tiefziehvorgang von Papier, Pappe und Karton, sowie anderen faserigen Materialien nochmals zu verbessern und die Qualität des erzeugten Formlings zu erhöhen.

Diese Aufgabe wird erfindungsgemäß durch eine Vorrichtung mit den Merkmalen des Anspruchs gelöst. Dabei ist vorgesehen, dass das Federelement beim Klemmen des flächigen Materials auf Block belastet werden kann bzw. bei mehreren Federelementen wenigstens ein Federelement auf Block belastet werden kann. Anspruch 8 bezieht sich auf ein Verfahren zur Verwendung der besagten erfindungsgemäßen Vorrichtung.

Zwischen der Anpressvorrichtung und der Unterlage wird das flächige, umzuformende Material angeordnet und geklemmt. Zudem lässt sich die Pressung verändern. Durch die Federelemente wird die Pressung gleichmässiger. Zudem werden Kraftspitzen vermieden. Wenn das Federelement auf Block belastet wird bzw. bei mehreren Federelementen wenigstens ein Federelement auf Block belastet wird, wird ein definiertes System mit definierter Kraft geschaffen.

Dabei hat es sich als sehr vorteilhaft erwiesen, wenn die Anpressvorrichtung flächig, ringförmig und/oder an die Kontur der dreidimensionalen Umformung angepasst ausgebildet ist.

Damit wird sichergestellt, daß das flächige Material beim Umformvorgang allseitig gehalten wird.

Eine weitere erfindungsgemäß sehr vorteilhafte Ausgestaltung liegt auch vor, wenn wenigstens ein Hebel, vorzugsweise mehrere zusammenwirkende Hebel vorgesehen sind, welche an der Anpressvorrichtung angreifen.

Hierdurch wird die Bewegung gleichmässiger und die Anpresskraft erhöht.

Sehr vorteilhaft ist es in diesem Zusammenhang, wenn eine Antriebseinheit für die Anpressvorrichtung vorgesehen ist.

Hierdurch kann die Pressung sehr gut gesteuert werden.

Äußerst vorteilhaft ist es dabei, wenn als Antriebseinheit ein Servomotor vorgesehen ist.

Mit einem Servomotor lässt sich die Vorrichtung besonders präzise steuern.

Dabei ist es äußerst vorteilhaft, wenn als Federelement Tellerfedern und/oder Schraubenfedern vorgesehen sind.

Ebenfalls sehr vorteilhaft ist es, wenn als Federelement Torsionsfederelemente vorgesehen sind.

Durch diese Federelemente kann die Kraft sehr gut eingestellt und gehalten werden.

Ein besonders vorteilhaftes Verfahren zum Halten eines flächigen Materials beim dreidimensionalen Umformen mit einer Vorrichtung gemäß der vorliegenden Erfindung liegt vor, wenn die Anpresseinrichtung gegen die Unterlage gedrückt wird und so das dazwischen liegende flächige Material gehalten wird.

Damit wird das flächige Material gehalten und für den Umformvorgang aufgespannt.

Dabei hat es sich als sehr vorteilhaft erwiesen, wenn die Haltekraft durch die Anpresskraft bestimmt wird und diese wiederum durch die anzufahrende Position der Anpresseinrichtung.

Durch das Anfahren einer vorgegebenen Position wird das Ergebnis reproduzierbar, ohne daß es aufwendiger, im laufenden Betrieb nicht realisierbarer Kraftmessungen bedarf.

Sehr vorteilhaft ist es erfindungsgemäß auch, wenn die Haltekraft während des Umformvorganges verändert wird, wobei in der Regel eine Verminderung der Haltekraft vorgesehen sein kann.

Dadurch kann ein gezieltes Nachrutschen des Materials ermöglicht werden, wodurch die entstehenden Falten besonders fein und glatt werden.

Eine weitere sehr vorteilhafte Ausgestaltung liegt vor, wenn das Federelement beim Drücken der Anpresseinrichtung mit einer Kraft belastet wird.

Damit wird die Haltekraft konstant gehalten, ohne dass die Anpresseinrichtung mechanisch nachreguliert werden muss.

Im folgenden wird die Erfindung anhand eines Ausführungsbeispiels veranschaulicht.

Dabei zeigen:
- Fig. 1: ein Schaubild einer erfindungsgemäßen Vorrichtung mit Anpresseinrichtung und Tiefziehvorrichtung,

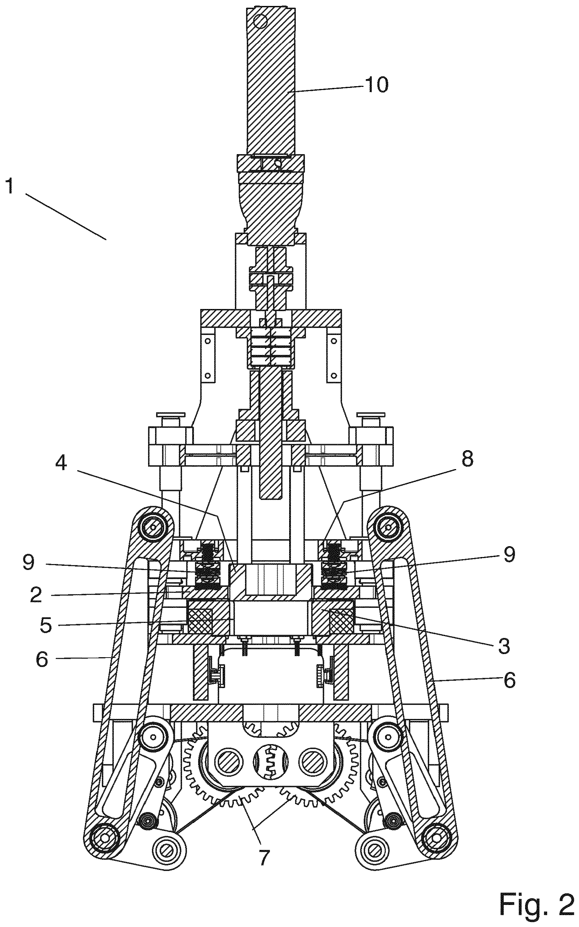

- Fig. 2: einen Schnitt durch dieselbe Vorrichtung,

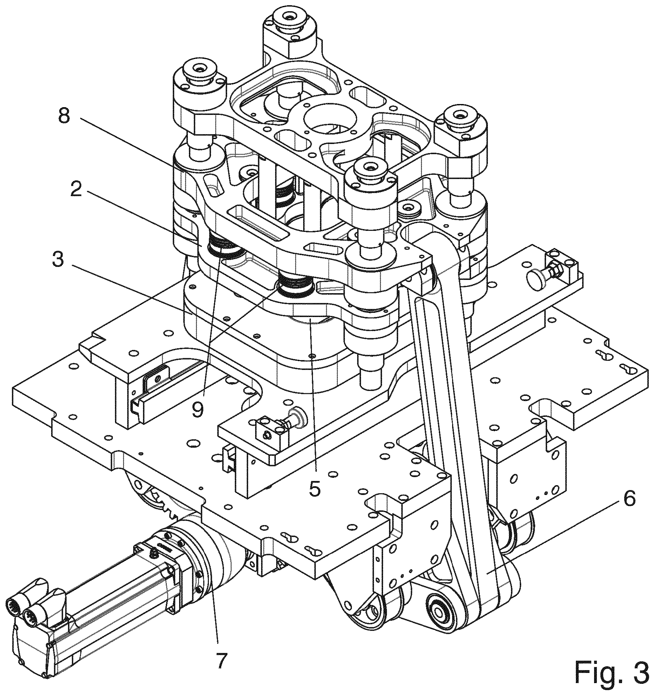

- Fig. 3: ein Schaubild der Vorrichtung mit herausgenommener Tiefziehvorrichtung, und

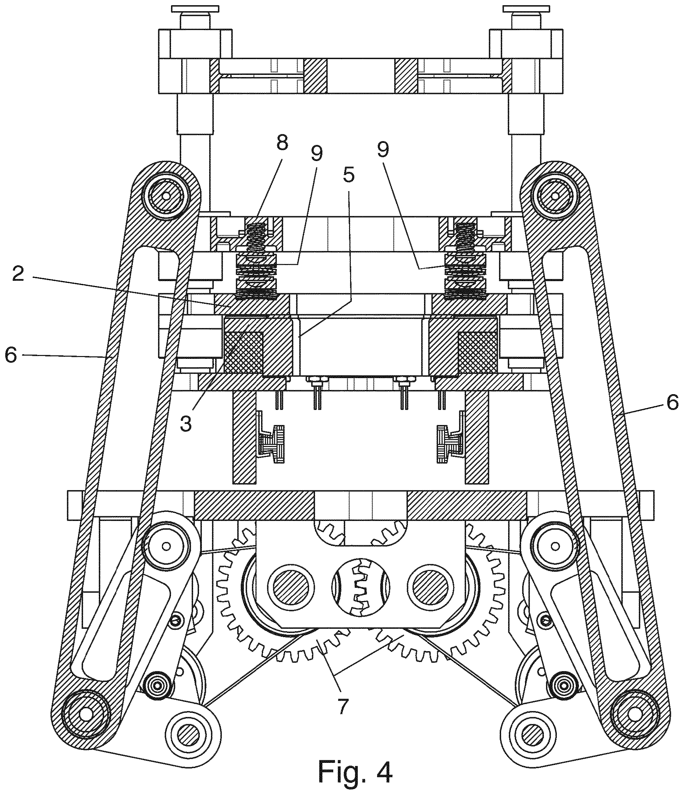

- Fig. 4: einen Schnitt die Vorrichtung gemäß Fig. 3

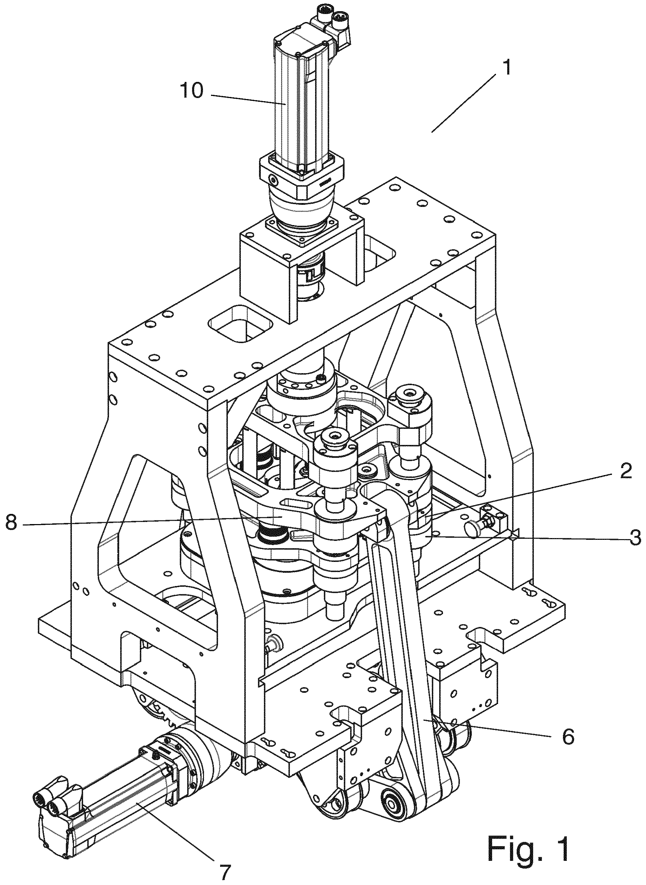

Mit 1 ist in Fig. 1 eine Vorrichtung zum Klemmen, Halten und/oder Führen von flächigem Material beim dreidimensionalen Umformen bezeichnet.

Diese Vorrichtung besteht im Wesentlichen aus einer Anpressvorrichtung 2 und einer Unterlage 3. Zwischen der Anpressvorrichtung 2 und der Unterlage 3 wird nicht dargestelltes flächiges Material beim dreidimensionalen Umformen ein- und für den Umformvorgang aufgespannt.

Bei dem genannten flächigen Material handelt es sich um Papier oder Karton oder anderes faserhaltiges, flächiges Material.

Diese Materialien sind in der Regel nicht dreidimensional umformbar, da diese nicht, wie beispielsweise Kunststoffmaterialien gestreckt und gestaucht werden können, ohne Falten zu bilden.

Falten beeinflussen jedoch das Erscheinungsbild äußerst negativ. Zudem wird die Stabilität der mit Falten umgeformten Gegenstände zu wünschen übrig lassen.

Bislang wurde das Problem derart angegangen, daß die Falten an vordefinierten Stellen angeordnet wurden, indem beispielsweise Prägungen oder Rillungen im Material vorgesehen wurden oder aber die Geometrie der Tiefdrückform und des Tiefdrückstempels diese Prägungen bereits enthielt.

Bei solchen Ansätzen kann aber kein glatter Rand gebildet werden, auf den beispielsweise eine Deckelfolie oder einfach eine Deckelplatte aufgesiegelt werden kann. Zumindest ist diese Verbindung nicht dicht.

Mit der erfindungsgemäßen Vorrichtung 1 wird das Material zwischen der Anpressvorrichtung 2 und der Unterlage 3 eingespannt. Wird nun das Material mit einem Stempel 4 durch eine in der Unterlage angeordnete Ziehbüchse 5 gedrückt, sorgt die Anpressvorrichtung 2 dafür, daß das Material kontrolliert nachrutschen kann, wodurch sich gleichmäßig verteilte, extrem feine, in der Regel nicht mehr sichtbare Falten bilden, die auch die Stabilität des gebildeten dreidimensionalen Gegenstandes nicht negativ beeinflussen.

Die Anpressvorrichtung wird über Kniehebel 6 gegen die Unterlage 3 gezogen, wobei die Kniehebel 6 von Motoren 7 angetrieben werden, die im vorliegenden Ausführungsbeispiel als Servomotoren ausgebildet sind.

Die Kniehebel 6 greifen an der Anpressvorrichtung 2 über eine Zwischenplatte 8 an. Zwischen der Zwischenplatte 8 und der Anpressvorrichtung 2 sind mehrere Federpakete 9 vorgesehen, die im vorliegenden Ausführungsbeispiel aus Tellerfedern und Schraubenfedern aufgebaut sind.

Der Stempel 4 wird durch einen Linearmotor 10 angetrieben und so in die Ziehbüchse 5 hineingedrückt und wieder heraus gezogen.

Um nun ein flachliegendes Material zu spannen werden die Servomotoren 7 an eine bestimmte, vorgegebene Position gefahren. Über die Kniehebel 6 wird die Anpresskraft der Anpressvorrichtung 2 erhöht, die an der vorgegebenen Position ebenfalls einen vorgegebenen Wert aufweist.

Während nun der Stempel 4 in die Ziehbüchse 5 hinein fährt, fahren die Servomotoren 7 definiert zurück, wodurch das flachliegende Material gezielt nachrutschen kann und durch das Zusammenwirken von Ziehbüchse 5 und Stempel 4 umgeformt wird.

Beim ersten Anpressen der Anpressvorrichtung 2 gehen ein Teil der Federn in den Federpaketen 9 auf Block, so daß eine Anpresskraftbegrenzung vorliegt. Erst wenn alle Federn eines Federpakets 9 auf Block gehen, wird die volle Anpresskraft erreicht.

Zusätzlich wird das Umformergebnis durch einen vergleichsweise engen Ziehspalt verbessert, der sich im Bereich der Materialdicke des umzuformenden Materials bewegt.

Die Anpressvorrichtung 2 und auch die Unterlage 3 umfassen die Ziehbüchse 5 sowie den Stempel 4 und sind auf deren Kontur abgestimmt.

Die Ziehbüchse 5 muss dabei nicht als klassische Büchse ausgeformt, sondern kann auch als Ring ausgebildet sein.

Anstatt der genannten Servo- und/oder Linearmotore können auch andere, eine mechanische Kraft erzeugende Antriebseinheiten vorgesehen werden. Denkbar sind hier beispielsweise pneumatische oder hydraulische Motoren oder Zylinder.

## Patentansprüche

1. Vorrichtung (1) zum Klemmen, Halten und/oder Führen von flächigem Material, nämlich Papier oder Karton oder anderes faserhaltiges, flächiges Material beim dreidimensionalen Umformen dieses Material mit einem Stempel (4) und einer dazugehörigen Ziehbüchse (5), wobei eine Anpressvorrichtung (2) und eine Unterlage (3) vorgesehen sind und wobei ein mechanischer Antrieb vorgesehen ist, der die Anpressvorrichtung (2) gegen die Unterlage (3) zu pressen vermag und wobei zwischen Anpressvorrichtung (2) und mechanischem Antrieb und/oder im mechanischen Antrieb wenigstens ein Federelement vorgesehen ist, **dadurch gekennzeichnet, daß** das Federelement beim Klemmen des flächigen Materials auf Block belastet werden kann bzw. bei mehreren Federelementen wenigstens ein Federelement auf Block belastet werden kann.

2. Vorrichtung nach Anspruch 1, **dadurch gekennzeichnet, daß** die Anpressvorrichtung (2) flächig, ringförmig und/oder an die Kontur der dreidimensionalen Umformung angepasst ausgebildet ist.

3. Vorrichtung nach Anspruch 1 oder 2, **dadurch gekennzeichnet, daß** wenigstens ein Hebel (6), vorzugsweise mehrere zusammenwirkende Hebel vorgesehen sind, welche an der Anpressvorrichtung (2) angreifen.

4. Vorrichtung nach einem der vorangehenden Ansprüche, **dadurch gekennzeichnet, daß** eine Antriebseinheit (7) für die Anpressvorrichtung (2) vorgesehen ist.

5. Vorrichtung nach Anspruch 4, **dadurch gekennzeichnet, daß** als Antriebseinheit ein Servomotor (7) vorgesehen ist.

6. Vorrichtung nach einem der vorangehenden Ansprüche, **dadurch gekennzeichnet, daß** als Federelement Tellerfedern und/oder Schraubenfedern vorgesehen sind.

7. Vorrichtung nach einem der vorangehenden Ansprüche, **dadurch gekennzeichnet, daß** als Federelement Torsionsfederelemente vorgesehen sind.

8. Verfahren zum Halten eines flächigen Materials beim dreidimensionalen Umformen mit einer Vorrichtung nach einem der vorangehenden Ansprüche, **dadurch gekennzeichnet, daß** die Anpressvorrichtung (2) gegen die Unterlage (3) gedrückt wird und so das dazwischen liegende flächige Material gehalten wird.

9. Verfahren nach Anspruch 8, **dadurch gekennzeichnet, daß** die Haltekraft durch die Anpresskraft bestimmt wird und diese wiederum durch die anzufahrende Position der Anpressvorrichtung (2).

10. Verfahren nach Anspruch 8 oder 9, **dadurch gekennzeichnet, daß** die Haltekraft während des Umformvorganges verändert wird, wobei in der Regel eine Verminderung der Haltekraft vorgesehen sein kann.

11. Verfahren nach Anspruch 8, 9 oder 10, **dadurch gekennzeichnet, daß** ein Federelement beim Drücken der Anpressvorrichtung (2) mit einer Kraft belastet wird.

## Claims

1. Device (1) for clamping, holding and/or guiding flat material, namely paper or cardboard or another fibrous flat material, during three-dimensional deformation of this material by a ram (4) and an associated drawing bush (5), wherein a pressing device (2) and a support (3) are provided and wherein a mechanical drive capable of pressing the pressing device (2) against the support (3) is provided and wherein at least one spring element is provided between the pressing device (2) and mechanical drive and/or in the mechanical drive, **characterised in that** the spring element during clamping of the flat material can be loaded to block state or in the case of several spring elements at least one spring element can be loaded to block state.

2. Device according to claim 1, **characterised in that** the pressing device (2) is formed to be flat, annular and/or adapted to the contour of the three-dimensional deformation.

3. Device according to claim 1 or 2, **characterised in that** at least one lever (6), preferably a plurality of co-operating levers, is provided, which levers engage the pressing device (2).

4. Device according to any one of the preceding claims, **characterised in that** a drive unit (7) for the pressing device (2) is provided.

5. Device according to claim 4, **characterised in that** a servomotor (7) is provided as drive unit.

6. Device according to any one of the preceding claims, **characterised in that** plate springs and/or helical springs are provided as spring element.

7. Device according to any one of the preceding claims, **characterised in that** torsion spring elements are provided as spring element.

8. Method of holding a flat material during three-dimensional deforming by a device according to any one of the preceding claims, **characterised in that** the pressing device (2) is pressed against the support (3) and the flat material lying therebetween is held.

9. Method according to claim 8, **characterised in that** the holding force is determined by the pressing force and this in turn by the position, which is to be moved to, of the pressing device (2).

10. Method according to claim 8 or 9, **characterised in that** the holding force is varied during the deforming process, wherein a reduction of the holding force can usually be provided.

11. Method according to claim 8, 9 or 10, **characterised in that** a spring element is loaded with a force during pressing of the pressing device (2).

## Revendications

1. Dispositif (1) pour serrer, retenir et/ou guider un matériau plat, à savoir du papier ou du carton ou un autre matériau fibreux plat lors d'une déformation tridimensionnelle de ce matériau avec un poinçon (4) et une douille d'emboutissage associée (5), un dispositif de pressage (2) et un subjectile (3) étant prévus, et un entraînement mécanique étant prévu, lequel permet de presser le dispositif de pressage (2) contre le subjectile (3) et au moins un élément de ressort étant prévu entre le dispositif de pressage (2) et l'entraînement mécanique et/ou dans l'entraînement mécanique, **caractérisé en ce que** l'élément de ressort, lors du serrage du matériau plat, peut être sollicité à bloc ou, dans le cas de plusieurs éléments de ressort, au moins un élément de ressort peut être sollicité à bloc.

2. Dispositif selon la revendication 1, **caractérisé en ce que** le dispositif de pressage (2) est réalisé sous forme plate, annulaire et/ou de manière adaptée au contour de la déformation tridimensionnelle.

3. Dispositif selon la revendication 1 ou 2, **caractérisé en ce qu'**au moins un levier (6), de préférence plusieurs leviers coopérants, sont prévus, lesquels viennent en prise avec le dispositif de pressage (2).

4. Dispositif selon l'une quelconque des revendications précédentes, **caractérisé en ce qu'**une unité d'entraînement (7) pour le dispositif de pressage (2) est prévue.

5. Dispositif selon la revendication 4, **caractérisé en ce qu'**un servomoteur (7) est prévu en tant qu'unité d'entraînement.

6. Dispositif selon l'une quelconque des revendications précédentes, **caractérisé en ce que** des ressorts Belleville et/ou des ressorts hélicoïdaux sont prévus en tant qu'élément de ressort.

7. Dispositif selon l'une quelconque des revendications précédentes, **caractérisé en ce que** des éléments de ressort de torsion sont prévus en tant qu'élément de ressort.

8. Procédé pour retenir un matériau plat lors de la déformation tridimensionnelle avec un dispositif selon l'une quelconque des revendications précédentes, **caractérisé en ce que** le dispositif de pressage (2) est pressé contre le subjectile (3) et de ce fait le matériau plat situé entre eux est retenu.

9. Procédé selon la revendication 8, **caractérisé en ce que** la force de retenue est définie par la force de pressage et celle-ci est à son tour définie par la position suivant laquelle le dispositif de pressage (2) doit être avancé.

10. Procédé selon la revendication 8 ou 9, **caractérisé en ce que** la force de retenue est modifiée pendant l'opération de déformation, une réduction de la force de retenue pouvant en général être prévue.

11. Procédé selon la revendication 8, 9 ou 10, **caractérisé en ce qu'**un élément de ressort est sollicité avec une force lors du pressage du dispositif de pressage (2).
